# EUROPÄISCHE PATENTSCHRIFT

(11) **EP 1 432 275 B1**
(45) Veröffentlichungstag und Bekanntmachung des Hinweises auf die Patenterteilung: **01.03.2006**
(21) Anmeldenummer: 02360352.5
(22) Anmeldetag: 17.12.2002
(51) Int. Cl.: H04Q 11/04, H04M 3/22

(54) **Überwachungsvorrichtung**
Surveillance apparatus
Appareil de surveillance

(43) Veröffentlichungstag der Anmeldung: 23.06.2004
(73) Patentinhaber: ALCATEL, 75008 Paris (FR)
(72) Erfinder: Ashrafi, Bagher, 73240 Wendlingen (DE)
(74) Vertreter: Menzietti, Domenico

(56) Entgegenhaltungen:
- EP-A- 0 522 694
- EP-A- 0 573 735
- DE-C- 19 729 072
- US-B1- 6 370 122

## Beschreibung

Die Erfindung betrifft eine Überwachungsvorrichtung.

Die Überwachungsmöglichkeiten von ISDN-Verbindungen sind beschränkt; ISDN = Integrated Services Digital Network. Dies rührt daher, dass sowohl beim Teilnehmer als auch in der Vermittlungsstelle eine 4-Draht zu 2-Draht Umsetzung stattfindet, wodurch auf der 2-Draht Leitung eine nicht zuzuordnende Abfolge von digitalen Signalen auftritt. In der Vermittlungsstelle als solche sind die übertragenen Daten durch die Rückumsetzung wieder verfügbar, doch ist der Zugang zur Vermittlungsstelle dem Netzbetreiber vorbehalten und somit ohne seine Zustimmung nicht ohne weiteres möglich.

Es ist eine Aufgabe der Erfindung, die Überwachung eines ISDN-Teilnehmers zu vereinfachen bzw. erst zu ermöglichen.

Gelöst wird diese Aufgabe durch eine Überwachungsvorrichtung gemäß Patentanspruch 1.

Aus der EP 0522694 ist bekannt, zwei interne, fiktive 4-Draht Verbindung, an der Signale abgegriffen werden können zu generieren, die einem Multiplexer/Demultiplexer als Eingangs- und Steuersignale dienen zwecks Separierung von Nutz- und/oder Signalisierungsinformationen. Auf einem ersten der 4 Drähte werden Taktsignale bereitgestellt, auf einem zweiten Rahmensignale. Auf dem dritten Draht sind die Informationssignale der Hinrichtung und auf dem vierten Droht die Informationssignale der Rückrichtung separiert. Mittels der Takt- und Rahmensignale lassen sich die Informationssignale separieren. Zu den Informationssignalen gehören sowohl die Nutzinformationen, die in sog. B-Kanälen übertragen werden als auch die Signalisierungsinformationen, die in sog. D-Kanälen übertragen werden.

Die solche Einrichtung wird in die zu überwachende Verbindung eingeschleift. Dies erfolgt z.B. beim Kabelverzweiger oder im Keller eines Hauses oder an einem beliebigen anderen zugänglichen Punkt entlang der Verbindungsstrecke..

In vorteilhafter Weise sind sowohl reine ISDN-Verbindungen über U_{K0}-Schnittstellen als auch DSL-ISDN-Verbindungen über U-Schnittstellen, bei denen ISDN in einem Extrakanal im DSL übertragen wird, überwachbar; DSL = Digital Subscriber Line. DSL wird auch als XDSL bezeichnet, wobei X z.B. für A =Asymmetrisch, S =Symmetrisch, VH = Very High, etc. stehen kann. Die Erfindung ist auf alle Varianten von DSL anwendbar.

Die Erfindung erlaubt es eine Überwachung online ohne negative Auswirkungen auf den Teilnehmer zu installieren.

Die Überwachungsmöglichkeiten sind vielfältig. Insbesondere wird ein D-Kanal separiert und mittels eines D-Kanal-Protokollanalyzer zur Überwachung des separierten D-Kanals ein D-Kanals mit verändertem Inhalt bereitgestellt im Falle der Detektierung einer vorgegebenen Kennung. Mittels des veränderten Inhalts, der zum zu überwachenden Teilnehmer übertragen wird, wird ein beim zu überwachenden Teilnehmer installiertes Überwachungsgerät angesprochen, dass eine diskrete Überwachung des Teilnehmers ohne seine Kenntnis duchführt. Das Überwachungsgerät beinhaltet z.B. ein Mikrofon, das eine akustische Raumüberwachung ermöglicht, und/oder eine Kamera, die eine visuelle Raumüberwachung ermöglicht.

Vorteilhafterweise ist die Kennung ein im D-Kanal übertragenes Passwort oder eine im D-Kanal übertragene vorgegebene Rufnummer eines bestimmten, rufenden Teilnehmers. Ein vorgegebenes, dem D-Kanal-Protokollanalyzer bekanntes Passwort wird von einem bestimmten rufenden Teilnehmer über eine Vermittlungsstelle zur Überwachungsvorrichtung übertragen. Die Übertragung erfolgt z.B. im für die Übertragung von User-to-User Informationen reservierten Zeitschlitz im D-Kanal. Der D-Kanal-Protokollanalyzer überwacht diesen Zeitschlitz und vergleicht ihn mit dem vorgegebenen Passwort. Empfängt er das vom rufenden Teilnehmer übertragene Passwort, so verändert er den Inhalt des D-Kanals damit das beim zu überwachenden Teilnehmer installierte Überwachungsgerät angerufen werden kann. Alternativ zum Passwort überwacht der D-Kanal-Protokollanalyzer die im D-Kanal übertragene Information über die Rufnummer des rufenden Teilnehmers. Entspricht die empfangene Rufnummer der Rufnummer des bestimmten, dem D-Kanal-Protokollanalyzer bekannten Teilnehmer, so verändert er den Inhalt des D-Kanals damit das beim zu überwachenden Teilnehmer installierte Überwachungsgerät angerufen werden kann.

Bei einer vorteilhaften Ausgestaltung der Erfindung ist der D-Kanal-Protokollanalyzer derart ausgestaltet, im Falle der Detektierung der vorgegebenen Kennung die im separierten D-Kanal enthaltene Gerätetyp-Nummer durch eine vorgegebene Gerätetyp-Nummer zu ersetzen. Im ISDN werden im D-Kanal neben der Rufnummer des rufenden Teilnehmers auch die Gerätetyp-Nummer des rufenden Teilnehmers übertragen. Die Gerättyp-Nummer gibt den Gerätetyp an. Ein Gerätetyp ist z.B. ein ISDN-Telefon, ein anderer ein Faxgerät. Mittels der Gerätetyp-Nummer wird gewährleistet, dass eine Verbindung zwischen zwei gleichen Geräten aufgebaut wird, zumindest solchen mit gleicher Funktionalität. Es wird somit in der regel eine ISDN-Verbindung von einem ISDN-Telefon des rufenden Teilnehmers nur zu einem ISDN-Telefon des angerufenen Teilnehmers weitergeleitet, und nicht beispielsweise zum Faxgerät des angerufenen Teilnehmers. Es kann auch eine Verbindung zu einem Terminaladapter ausgebaut werden, an den ein analoges Telefon angeschlossen ist, um ein Telefongespräch zwischen ISDN-Telefon und analogem Telefon zu ermöglichen.

Bei einem ISDN-Anschluß in Basiskonfiguration können einem Teilnehmer maximal acht Gerätetypen zugeordnet werden. In der Regel sind aber maximal vier benutzt, z.B. für ISDN-Telefone, Faxgeräte, Terminal Adapter, Personalcomputer, so dass noch mindestens vier ungenutzt sind. Dem Überwachungsgerät wird eine ungenutzte Gerätetyp-Nummer zugeordnet. Wird das Überwachungsgerät angerufen, so wird dadurch keines des bisher genutzten Geräte aktiviert; der angerufene Teilnehmer hat somit keine Kenntnis darüber, dass das Überwachungsgerät aktivert wurde. Da der zu überwachende Teilnehmer vom rufenden angerufen wird, entstehen beim zu überwachenden Teilnehmer keine Telefongebühren, so dass der zu überwachende Teilnehmer auch nicht im Nachhinein durch die Gebührenabrechnung mit Einzelnachweis feststellen kann, ob und in welchem Zeitraum eine Überwachung stattfand.

Der D-Kanal-Protokollanalyzer ist vorteilhafterweise derart ausgestaltet, im Falle der Detektierung der vorgegebenen Kennung die Kommunikation zu einem angerufenen und zu überwachenden Teilnehmer auf eine Layer 1 und Layer 2 Kommunikation zu beschränken und eine Layer 3 Kommunikation zu unterbinden. Mittels eines mit dem S₀-Bus des zu überwachenden ISDN-Teilnehmers verbundenen Personalcomputers läßt sich überwachen, ob ein B-Kanal belegt ist oder nicht. Insofern wäre feststellbar, ob ein Überwachungsgerät installiert und aktiviert wurde. Die Belegung des B-Kanals läßt sich aber erst bei einer Layer 3 Kommunikation feststellen. Wird diese durch den D-Kanal-Protokollanalyzer verhindert, so kann zwar dennoch das Überwachungsgerät aktiviert werden, aber die Belegung des zugehörigen B-Kanals ist nicht möglich.

Der D-Kanal-Protokollanalyzer ist vorteilhafterweise derart ausgestaltet, im Falle der Detektierung der vorgegebenen Kennung den Inhalt des D-Kanals nur dann zu verändern und zum zu überwachenden Teilnehmer weiterzuleiten, wenn beide für den überwachenden Teilnehmer zur Verfügung stehenden B-Kanäle nicht belegt sind. Der zu überwachende Teilnehmer soll möglichst keine Kenntnis davon bekommen, dass er überwacht wird. Würde durch die Überwachung die beiden B-Kanäle der ISDN-Teilnehmerleitung derart blockiert, dass keine Anrufe mehr zum Teilnehmer durchgestellt werden könnten, z.B. auf grund eines Belegtzeichens, oder dass der Teilnehmer selbst keine Gespräche mehr iniziieren könnte, so könnte die Überwachung detektiert werden.

Dem Teilnehmer stehen zwei B-Kanäle zur Übertragung zur Verfügung. Für die Überwachung wird mindestens ein B-Kanal benötigt. Die Überwachung wird nur gestartet, nachdem festgestellt wurde, dass beide B-Kanäle nicht belegt sind. In diesem Fall wird ein B-Kanal für die Überwachung belegt und der andere B-Kanal ist frei für eingehende und abgehende Rufe. Wird durch die D-Kanal Überwachung während der Überwachung ein eingehender oder abgehender Anruf detektiert, so wird die Überwachung gestoppt. In diesem Fall wird die Überwachung nicht über das Überwachungsgerät, sondern über das mit dem Anruf belegte Endgerät fortgesetzt.

Beim zugehörigen, erfindungsgemäße, Verfahren zum Überwachen eines ISDN-Teilnehmers baut ein bestimmter, rufender Teilnehmer eine Verbindung zu einer zwischen Vermittlungsstelle und zu überwachendem Teilnehmer geschaltete Überwachungsvorrichtung auf. Die Überwachungsvorrichtung detektiert durch Überwachen des D-Kanals den rufenden Teilnehmer aufgrund einer vorgegebenen Kennung und überträgt zur Vermittlungsstelle eine Rückmeldung betreffend einer erfolgreichen Verbindungsaufnahme zum zu überwachenden Teilnehmer. Ferner überträgt die Überwachungsvorrichtung über den D-Kanal zum überwachenden Teilnehmer veränderte Signalisierungsinformationen zwecks Aufbau einer Verbindung zu einem beim zu überwachenden Teilnehmer angeordneten Überwachungsgerät.

Ferner kann in einer vorteilhaften Ausgestaltung mittels des D-Kanal Protokollanalyzers z.B. eine D-Kanal Überwachung durchgeführt werden zwecks Detektion der Teilnehmer-Rufnummer. Ferner ist eine Bitfehlermessung möglich. Ferner sind Abhörmöglichkeiten für Sprach- und/oder Datensignale geschaffen. Die Polizei erhält die Möglichkeit, ISDN-Gespräche abzuhören. Ferner kann der Internet-Datenverkehr eines Teilnehmers überwacht werden. Des weiteren ist der Datenverkehr, z.B. E-Mail-Verkehr, überwachbar.

In einer weiteren vorteilhaften Ausgestaltung ist die Überwachungsvorrichtung auch zum Senden von Informationen im B-Kanal geeignet. Dann ist eine Kommunikation zwischen Überwachungsvorrichtung und Teilnehmer sowie Vermittlungsstelle möglich. Beispielsweise wird ein Testsignal gesendet, dass von der Vermittlungsstelle empfangen wird und dessen Empfangsqualität gemessen wird.

Im folgenden wird die Erfindung anhand von einem Ausführungsbeispiel unter Zuhilfenahme von zwei Figuren erläutert. Es zeigen:
- Fig. 1: eine schematische Darstellung einer erfindungsgemäßen Überwachungsvorrichtung in einer DSL-ISDN-Verbindung und
- Fig. 2: eine schematische Darstellung des detaillierten Aufbaus der Überwachungsvorrichtung aus Fig. 1.

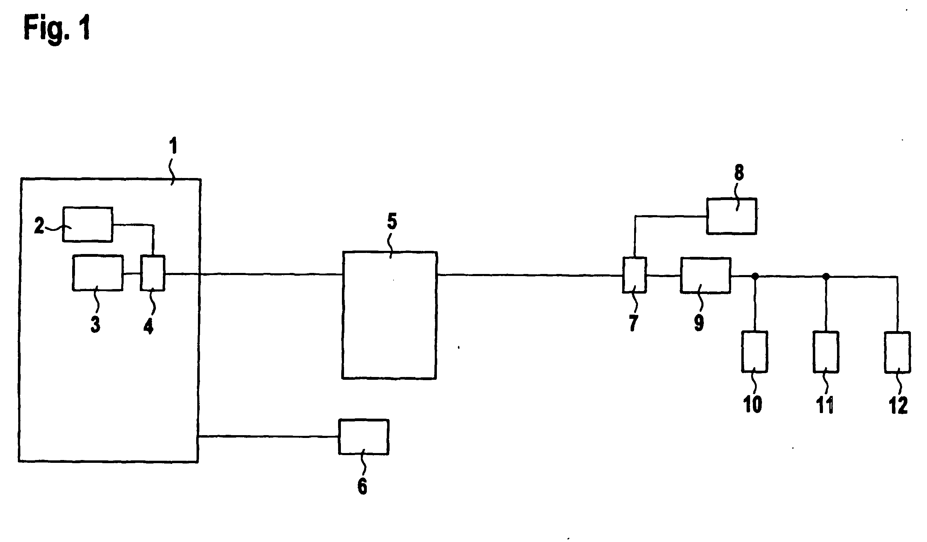

Das Ausführungsbeispiel wird nun zunächst unter Zuhilfenahme von Fig. 1 erläutert. Fig. 1 zeigt eine Überwachungsvorrichtung 5 in einer DSL-ISDN-Verbindung. Die Überwachungsvorrichtung 5 ist eingeschleift in eine DSL-ISDN-Verbindung zwischen einem ISDN LT 3, einem DSL LT 2 und einem Filter 4 auf der Netzbetreiberseite und einem ISDN NT 9, einem DSL Modem 8 und einem Filter 7 auf der Teilnehmerseite; LT = Line Termination, NT = Network Termination. Das DSL mit ISDN ist ein privates Telekommunikationsnetz eines Netzbetreibers. ISDN LT 3, DSL LT 2 und Filter 4 sind in einer Vermittlungsstelle 1 angeordnet. An der Schnittstelle zum privaten Netz eines Teilnehmers ist ein Netzabschluß für ISDN angeordnet, der sog. ISDN NT 9, der das ISDN abschließt. Teilnehmerseitig ist der ISDN NT 9 über einen 4-Draht S₀-Bus mit einem Überwachungsgerät und mindestens einem Endgerät 11, 12 verbunden. Das Überwachungsgerät 10 dient zur Überwachung des Teilnehmers. Es beinhaltet z.B. ein Mikrofon und/oder eine Kamera. Dem Überwachungsgerät 10 ist eine Gerätetyp-Nummer zugeordnet, die keinem anderen an dem S₀-Bus angeschlossenen Endgerät 11, 12 zugeordnet ist. Werden bei einem Teilnehmer zwei oder mehr Überwachungsgeräte installiert, so können diesen unterschiedliche oder gleiche Gerötetyp-Nummern zugeordnet werden. Sind unterschiedliche Gerätetyp-Nummern zugeordnet, so können die einzelnen Überwachungsgeräte individuell angesprochen werden. Sind gleiche Gerätetyp-Nummern vergeben, so erfolgt ein sequentielles Ansprechen durch z.B. ein Zeitmultiplexprotokoll.

Endgerät 11 ist z.B. ein digitales Endgerät. Als analoges Endgerät dient beispielsweise ein analoges Telefon oder ein analoges Faxgerät, als digitales Endgerät beispielsweise ein Computer, ein ISDN-Telefon oder ein digitales Telefon.

Endgerät 12 ist z.B. ein digitales Endgerät. Als analoges Endgerät dient beispielsweise ein analoges Telefon oder ein analoges Faxgerät, als digitales Endgerät beispielsweise ein Computer, ein ISDN-Telefon oder ein digitales Telefon.

Analoge Endgeräte können jeweils über einen sogenannten Terminaladapter, der eine Protokollumsetzung durchführt, an den S₀-Bus angeschlossen werden. Alternativ können analoge Endgeräte auch über eine Nebenstellenanlage mit dem S₀-Bus verbunden werden. Eine Nebenstellenanlage ist auch zum Anschluß von digitalen und analogen Endgeräten einsetzbar.

Netzseitig ist der ISDN NT 9 über eine 2-Draht Leitung mit einem ISDN LT 3 verbunden, ggf. unter Zwischenschaltung von einem oder mehr Bauelementen, z.B. einem Konzentrator, einem Splitter, etc. Zusätzlich zum ISDN werden optional über die gleiche physikalische Leitung DSL-Signale übertragen. Teilnehmerseitig ist dazu das DSL Modem 8 vorgesehen, an das teilnehmerseitig z.B. ein Computer oder ein Fernsehgerät angeschlossen ist, z.B. zwecks Inanspruchnahme von Service-on-demand und/oder Internet-Diensten. Netzseitig ist das DSL-Modem 8 mit einem DSL LT 2 verbunden, ggf. unter Zwischenschaltung von einem oder mehr Bauelementen, z.B. einem Konzentrator, einem Splitter, etc. Zur Trennung von ISDN- und DSL-Signalen sind die Filter 4 und 7 vorgesehen, die jeweils den gleichen Aufbau haben und in der Regel ein Hochpaßfilter zur Isolierung der DSL-Signale und ein Tiefpaßfilter zur Isolierung der ISDN-Signale aufweisen.

Des weiteren ist ein bestimmter, rufender Teilnehmer 6 vorgesehen, der über die Vermittlungsstelle mit der Überwachungsvorrichtung 5 verbunden ist. Teilnehmer 6 beinhaltet eine Telekommunikations-Einrichtung mittels derer eine Kommunikation in Richtung zum zu überwachenden Teilnehmer aufgebaut werden kann, beispielsweise eine Endstelle mit einem ISDN-Endgerät oder ein Mobiltelefon. Er dient zusammen mit der Überwachungsvorrichtung 5 dazu, der Vermittlungsstelle 1 eine Verbindung zum zu überwachenden Teilnehmer zu simulieren, um der Überwachungsvorrichtung 5 zu ermöglichen, eine Verbindung zum Überwachungsgerät 10 aufzubauen, die Überwachung durchzuführen und zu verhindern, dass die Vermittlungsstelle 1 die Schicht 1 Verbindung deaktiviert.

11.Wenn die U_{K0}-Teilnehmerstrecke daueraktiv geschaltet ist, ist die Verwendung des Teilnehmers 6 nicht notwendig. Ein Detektieren einer Kennung vor Starten der Überwachung entfällt. Die Überwachungsvorrichtung 5 ist dann in der Lage, den Startzeitpunkt der Überwachung eigenständig zu bestimmen. Soll eine Überwachung erfolgen, so wird zunächst der D-Kanal in Hin- und Rückrichtung überwacht. Ist kein B-Kanal belegt, so kann eine Überwachung über das Überwachungsgerät 10 erfolgen. Der D-Kanal Protokollanalyzer 21 generiert Signalisierungsinformationen zum Aufbau einer Verbindung zum zu überwachenden Teilnehmer, und insbesondere zum Überwachungsgerät 10. Die Signalisierungsinformationen beinhalten z.B. die vorgegebene Gerätetyp-Nummer des Überwachungsgeräts 10. Mittels eines Dekodierers, z.B. Dekodierer 22 werden die im zur Überwachung verwendeten B-Kanal übertragenen Nutzinformationen dekodiert und anschließend z.B. mittels eines B-Kanal Protokollanalyzers überwacht. Die Kommunikation zum angerufenen und zu überwachenden Teilnehmer wird vorteilhafterweise auf eine Layer 1 (= Schicht 1) und Layer 2 (=Schicht 2) Kommunikation beschränkt und eine Layer 3 (=Schicht 3) Kommunikation unterbunden.

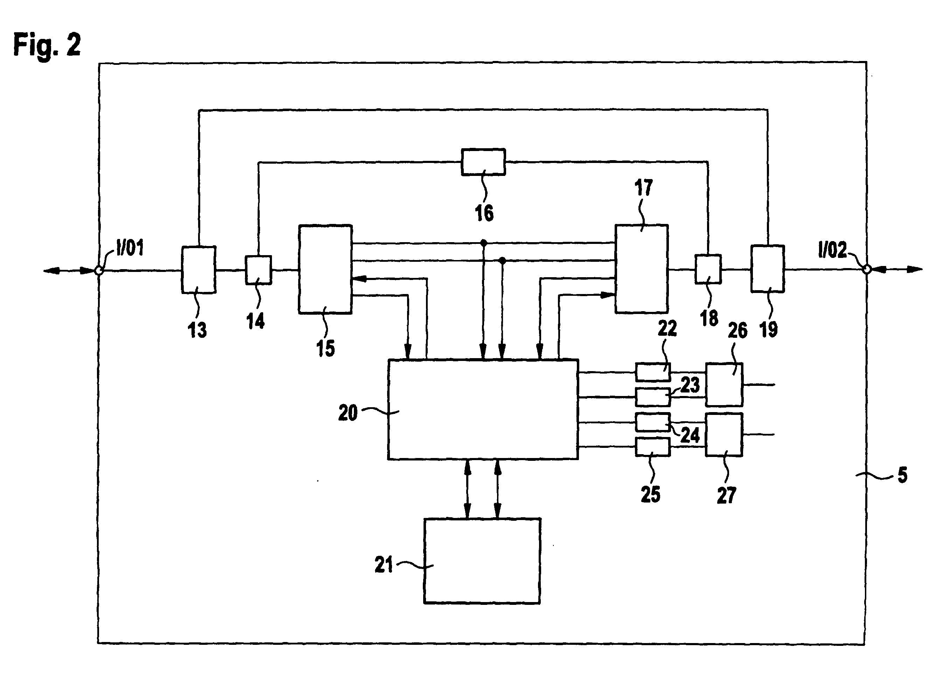

Das Ausführungsbeispiel wird nun weiter unter Zuhilfenahme von Fig. 2 erläutert. Fig. 2 zeigt einen detaillierten Aufbau der Überwachungsvorrichtung 5 aus Fig. 1.

Die Überwachungsvorrichtung 5 beinhaltet zwei Ein-/Ausgänge I/O1, I/O2 zum Verbinden der Überwachungsvorrichtung mit einer externen 2-Draht DSL-ISDN-Verbindung über sog. U-Schnittstellen. Der eine Ein-Ausgang I/O1 ist mit ISDN LT 3 und der andere Ein-/Ausgang I/O2 mit ISDN NT 9 verbunden.
Zwischen die beiden Ein-/Ausgänge I/O1, I/O2 sind zwei Umsetzer 15, 17 zur Generierung von zwei internen 4-Draht ISDN-Verbindung geschaltet. Die Umsetzer 15, 17 beinhalten jeweils einen U_{K0}- und einen IOM-Schaltkreis, die miteinander verbunden sind. Die Schaltkreise sind als integrierte Schaltungen ausgeführt. Der U_{K0}-Schaltkreis dient zur Bereitstellung der 2-Draht Schnittstelle, der IOM-Schaltkreis dient zur Bereitstellung der 4-Draht Schnittstelle. Jeder Schaltkreis führt eine Protokollumsetzung durch und beinhaltet zudem eine Einrichtung zur Taktrückgewinnung zwecks Extraktion der diversen Takte aus dem Signalstrom.

Über die U_{K0}-Schnittstelle werden die ISDN-Informationen kodiert übertragen. Dazu werden Leitungskodes verwendet, z.B. für eine Anpassung des digitalen Datenstroms an das Übertragungsmedium, die Übertragung der Bittakt-Information, die Übertragung der Rahmentakt-Information (alle ISDN Anschlußleitungen benutzen ein Zeitmultiplex-System zum Betrieb der verschiedenen Übertragungskanäle in jeweils eine Richtung) sowie für eine Fehlerdetektion auf Schicht 1. Die im ISDN verwendeten Leitungskodes lassen sich unterscheiden in pseudo-ternäre Kodes (AMI-Code, HDB-3 Code), ternäre Kodes (4B/3T Codes, hier MMS43), quarternäre Kodes (2B/1Q Codes). Die verwendeten Leitungskodes im ISDN müssen so gestaltet werden, dass sie gleichstromfrei sind. Nur so ist es möglich, Datensignale von der Speisespannung zu trennen, bei geringen Pegelunterschieden Signale sicher zu trennen, empfindliche Sender und Empfänger durch galvanische Trennung vor zerstörerischen Einflüssen über die Anschlußleitung sicher zu schützen sowie Taktinformation permanent in den Datenstrom hinein zu kodieren.
Auf einem ersten der 4 Drähte werden Taktsignale bereitgestellt, auf einem zweiten Rahmensignale. Auf dem dritten Draht sind die Informationssignale der Hinrichtung und auf dem vierten Draht die Informationssignale der Rückrichtung isoliert. Mittels der Takt- und Rahmensignale lassen sich die Informationssignale isolieren. Zu den Informationssignalen gehören sowohl die Nutzinformationen, die in sog. B-Kanälen übertragen werden als auch die Signalisierungsinformationen, die in sog. D-Kanälen übertragen werden.
Ferner ist ein Multiplexer/Demultiplexer 20 vorgesehen, der vier Eingänge und zwei Ausgänge zum Verbinden mit den zwei 4-Draht ISDN-Verbindung aufweist und zur Bereitstellung mindestens eines zu überwachenden Kanals dient. Der Multiplexer/Demultiplexer 20 ist vorzugsweise als IOM- oder IOM-2-Multiplexer/Demultiplexer ausgeführt; IOM = ISDN Oriented Modular = spezieller, serieller Bus in ISDN.
Mittels der Takt- und Rahmensignale ist der Multiplexer/Demultiplexer 20 in der Lage, Informationssignale zu isolieren. Die Taktsignale beinhalten z.B. den Bitakt, der ein Takt ist, mit dem einzelne Schritte (meist Bits) abgetastet werden. Die Rahmentaktsignale beinhalten z.B. den Rahmentakt, der ein Kennzeichen zur Dekodierung der TDM-Struktur ist; TDM = Time Division Multiplex.

Der Multiplexer/Demultiplexer 20 isoliert mindestens einen zu überwachenden Übertragungskanal, z.B. einen D-Kanal, über den Signalisierungssignale übertragen werden und/oder einen B-Kanal, über den Nutzinformationen übertragen werden. Die Anzahl und die Auswahl der zu isolierenden Übertragungskanäle hängt z.B. ab von der Zielsetzung der Überwachung. Soll z.B. nur die Rufnummer des rufenen Teilnehmers ermittelt werden, so genügt es, den entsprechenden Signalisierungskanal (D-Kanal) zu isolieren und zu überwachen. Sollen Gespräche abgehört werden, so werden mindestens zwei B-Kanäle überwacht, ein B-Kanal in Hinrichtung und der zugehörige Kanal in Rückrichtung. In einer bevorzugten Variante werden stets alle Kanäle isoliert, z.B. zwei B-Kanäle und ein D-Kanal in Hinrichtung sowie zwei B-Kanäle und ein D-Kanal in Rückrichtung und ggf. auch ein oder mehr Taktsignale. Die Taktsignale können dann in nachfolgenden Verorbeitungseinheiten zum Takten genutzt werden.
Die Anzahl der Ein- und Ausgänge des Multiplexer/Demultiplexer 20 ist entsprechend dem Einsatzweck zu wählen. Ein oder mehr Ein- und/oder Ausgänge können als externe Anschlüsse aus der Überwachungsvorrichtung 5 herausgeführt sein. Die Ansteuerung des Multiplexers/Demultiplexers 20 erfolgt z.B. über einem Prozessor, z.B. einen entsprechend programmierten Mikroprozessor oder Digitalen Signalprozessor. Zur Zwischenspeicherung ist mindestens ein Speicher vorgesehen.

Beim erfindungsgemäßen Verfahren zum Überwachen eines ISDN-Teilnehmers baut ein bestimmter, rufender Teilnehmer 6 eine Verbindung zu der zwischen Vermittlungsstelle 1 und zu überwachendem Teilnehmer geschaltete Überwachungsvorrichtung 5 auf. Die Überwachungsvorrichtung 5 detektiert durch Überwachen des D-Kanals den rufenden Teilnehmer 6 aufgrund einer vorgegebenen Kennung und überträgt zur Vermittlungsstelle 1 eine Rückmeldung betreffend einer erfolgreichen Verbindungsaufnahme zum zu überwachenden Teilnehmer. Die Rückmeldung dient dazu, eine erfolgreiche Verbindung zu simulieren, um zu verhindern, dass die Vermittlungsstelle 1 die Verbindung abschaltet. In Wirklichkeit baut die Überwachungsvorrichtung 5 eine eigene Verbindung zum zu überwachenden Teilnehmer auf, von der weder der Teilnehmer noch die Vermitllungsstelle Kenntnis erlangt. Dies erfolgt durch Übertragung von veränderten Signalisierungsinformationen über den D-Kanal zum überwachenden Teilnehmer zwecks Aufbau einer Verbindung zum beim zu überwachenden Teilnehmer angeordneten Überwachungsgerät 10. Die Signalisierungsinformationen enthalten z.B. eine Gerätetyp-Nummer, die speziell dem Überwachungsgerät 10 zugeordnet ist. Das Überwachungsgerät 10 wird so aktiviert und sendet daraufhin Informationen über einen B-Kanal zur Überwachungsvorrichtung 5. Die Informationen werden in der Überwachungsvorrichtung 5 zwischengespeichert, z.B. aufnahme auf Tape, und/oder ausgewertet. Enthalten die Informationen Bildsignale, können diese über einen Monitor durch eine Person überwacht werden. Enthalten die Informationen Sprachsignale, können diese über einen Lautsprecher durch eine Person überwacht werden. Alternativ oder zusätzlich können die Informationen über einen B-Kanal von der Überwachnungsvorrichtung 5 über die Vermittlungsstelle 1 zum rufenden Teilnehmer 6 weitergeleitet werden. Der rufende Teilnehmer 6 kann die Informationen dann ebenfalls zwischenspeichern und/oder auswerten. Während der gesamten Überwachungsphase wird der D-Kanal überwacht. Die Überwachung erfolgt z.B. in der Überwachungsvorrichtung 5. Geht eine Verbindungsaufbauanforderung beim zu überwachenden Teilnehmer ein oder ab, so schaltet die Überwachungsvorrichtung 5 die Überwachungsverbindung durch zwei Disconnect-Signale ab. Das eine Disconnect-Signal wird zur Vermittlungsstelle 1 übertragen, das andere zum Überwachungsgerät 10. Alternativ erfolgt die Überwachung im Überwachungsgerät 10. Geht eine Verbindungsaufbauanforderung beim zu überwachenden Teilnehmer ein oder ab, so schaltet der D-Kanal Protollanalyzer 21 die Überwachungsverbindung durch ein zur Vermittlungsstelle 1 übertragenes Disconnect-Signal ab und das Überwachungsgerät 10 deaktivert sich selbst bis zum Empfang der nächsten Aktivierungssignale von der Überwachungsvorrichtung 5.
Wenn keine Überwachung über das Überwachungsgerät 10 durchgeführt wird, wird eine Überwachung einer normalen Verbindung überwacht. Ein normale Verbindung wird z.B. durch eine Verbindungsaufbauanforderung durch eines der Endgeräte 11, 12 ausgelöst oder durch eine Verbindungsaufbauanforderung an eines der Endgeräte 11, 12 durch einen rufenden Teilnehmer. In beiden Fällen wird der D-Kanal und der für die Übertragung genutzte B-Kanal durch den D-Kanal Protollanalyzer 21 und ggf. einen B-Kanal Protokollanalyzer überwacht.
Somit ist es möglich eine zeitkontinuierliche Überwachung des zu überwachenden Teilnehmers durchzuführen. Es werden z.B. alle Gespräche, Datenübertragungen, etc. des Teilnehmers, ob selbst iniziiert oder nicht, überwacht, in den Zeitspannen, in denen die Teilnehmerleitung nicht belegt ist, wird eine Raumüberwachung über das Überwachungsgerät 10 durchgeführt.

Des weiteren sind zwei Hochpass/Tiefpass-Filter 13, 19 vorgesehen, die zwischen die beiden Ein-Ausgänge I/O1, I/O2 und die beiden Umsetzer 15, 17 geschaltet sind, um eine Umgehungsverbindung für DSL-Signale zu generieren. ISDN-Signale werden üblicherweise bei niedrigeren Frequenzen übertragen als DSL-Signale. Die Übertragungsbänder beider Signale überlappen nicht. Mittels eines Tiefpass-Filters mit einer Grenzfrequenz zwischen den Übertragungsbändern können die ISDN-Signale isoliert werden. Zu den Umsetzern 15, 17 gelangen somit nur ISDN-Signale, aber keine DSL-Signale. Mittels eines Hochpass-Filters mit einer Grenzfrequenz zwischen den Übertragungsbändern können die DSL-Signale isoliert werden, welche unverändert über die Umgehungsverbindung weitergeleitet werden.

Es sind optional vier Dekodierer 22, 23, 24, 25 oder ggf. Filter vorgesehen, um die Nutzinformationen zu dekodieren. Die Nutzinformationen werden kodiert übertragen. Zwecks Detektion und Überwachung ist eine Dekodierung durchzuführen. Die Dekodierer 22, 23, 24, 25 sind beispielsweise 4B/3T-Dekodierer oder 2B/1 Q-Dekodierer entsprechend der verwendeten Kodierung. An den Ausgängen der Dekodierer 22, 23, 24, 25 sind Nutzinformationen abgreifbar, die z.B. überwacht, verarbeitet, versendet, und/oder abgespeichert werden können. Zu den Nutzinformationen zählen z.B. Sprachsignale, Datensignale, Internetsignale, etc. Die Überwachung, etc. erfolgt z.B. mittels eines speziell programmierten Prozessors und einem Speicher. Als Prozessor wird z.B. ein Digitaler Signalprozessor oder ein Mikroprozessor verwendet. Anstelle eines Prozessors können auch mehrere Prozessoren und anstelle eines Speichers können auch mehrere Speicher verwendet werden. Anstelle eines Prozessors kann auch ein FPGA verwendet werden; FPGA = Freely Progrommable Gate Array. Für verschieden Signale, z.B. Sprach- und Datensignale, können verschiedene Verarbeitungseinheiten verwendet werden. Die Erfindung ist unabhängig von einer speziellen Hard- und/oder Softwareausgestaltung.
Die Ausgänge der Dekodierer 22, 23 sind mit Eingängen eines ersten Addierers 26 verbunden, dessen Ausgang mit einer internen oder externen Auswerteeinheit, z.B. ein Personalcomputer, verbunden ist. Die Ausgänge der Dekodierer 24, 25 sind mit Eingängen eines zweiten Addierers 27 verbunden, dessen Ausgang mit einer internen oder externen Auswerteeinheit verbunden ist. Am Ausgang des Addierers 26 können z.B. die Nutzinformationssignale der beiden B-Kanäle in Hinrichtung abgegriffen werden und am Ausgang des addierers 27 z.B. die Nutzinformationssignale der beiden B-Kanäle in Rückrichtung.

Ferner ist ein D-Kanal Protokollanalyzer 21 vorgesehen, um die Signalisierungsinformationen zu überwachen. Die D-Kanal Protokollanalyzer 21 ist z.B. als speziell programmierter Prozessor und einem Speicher ausgeführt. Er ist mit dem Multiplexer/Demultiplexer 20 verbunden. Die Schnittstellen zwischen beiden sind z.B. als S₀-Schnittstellen ausgeführt. Aus den vom Multiplexer/Demultiplexer 20 empfangenen Signalisierungssignalen im D-Kanal ist z.B. die angerufene Rufnummer sowie die rufende Rufnummer ermittelbar. Des weiteren können im D-Kanal Daten im paketvermittelnden Verfahren übertragen werden. Auch diese sind detektierbar. Ferner ist die übertragene Gerätetyp-Nummer detektierbar. Des weiteren ist der für User-to-User Informationen reservierte Zeitschlitz überwachbar. Bei einer Telefonkonferenz sind alle Teilnehmer identifizierbar. Ebenso können Rufumleitungen detektiert werden. Die detektierten Informationen sind auf einem Monitor darstellbar und können in einem Speicher gespeichert werden. Anstelle in der Überwachungsvorrichtung 5 kann der D-Kanal Protokollanalyzer 21 auch ausgelagert sein, sei es als eigenständige Einheit oder als Teil eines Computers. Beispielsweise werden die Ausgänge der Dekodierer 22, 23, 24, 25 und die Signalisierungsausgänge des Multiplexers/Demultiplexers 20 nach außen geführt. Diese Ausgänge werden dann mit einem Computer verbunden, der ein spezielles Softwareprogramm beinhaltet, mittels dessen die Auswertung, etc. der Signale erfolgen kann. Der Computer ist z.B. ein Laptop mit Monitor und Tastatur sowie Maus. Alternativ können auch die Dekodierer 22, 23, 24, 25 im Computer integriert sein, als Steckkarte implementiert oder ihre Funktion als Softwareprogramm. Dann werden sowohl die Nutzinformationsausgänge als auch die Signalisierungsausgänge des Multiplexers/Demultiplexers 20 nach außen geführt und mit dem Computer verbunden, der die weitere Auswertung, etc. übernimmt. Auf vergleichbare Art und Weise können in einer weiteren Ausgestaltung die Funktionen des Computers zumindest teilweise in die Überwachungsvorrichtung 5 integriert sein, so dass bereits in der Überwachungsvorrichtung 5 die Funktionen Dekodierung, Auswertung, Speicherung, bildliche Darstellung, etc. durchgeführt werden. Andererseits ist auch die Implementierung der Funktionen der Umsetzer 15, 17 und des Multiplexers/Demultiplexers 20 auf einer Steckkarte für einen Computer eine nicht unzweckmäßige Variante. Die Aufteilung der erfindungswesentlichen Funktionen auf verschiedene Hardware- und Softwarekomponenten ist für die Anwendung der Erfindung unwesentlich.

Des weiteren sind optional zwei Bauelemente zur galvanischen Trennung 14, 18 vorgesehen, die zwischen die beiden Hochpass/Tiefpass-Filter 13, 19 und die beiden Umsetzer 15, 17 geschaltet sind, um eine Umgehungsverbindung für Fernspeisesignale zu generieren. Neben den Nutz- und Signalisierungssignalen werden üblicherweise auch Fernspeisesignale übertragen. Sollten keine Fernspeisesignale übertragen werden, ist die Verwendung der Bauelemente 7, 8 unzweckmäßig. Fernspeisesignale stören die Detektion der Nutz- und Signalisierungsinformationen. Aus diesem Grund ist die Umgehungsverbindung vorgesehen. Die Fernspeisesignale werden über die Umgehungsverbindung unverändert weitergeleitet und erreichen die Umsetzer 15, 17 nicht. Bauelemente 14, 18 können z.B. sein: Übertrager, Opto-Koppler, etc. Zwischen die Bauelemente 14, 18 sind üblicherweise Drosseln 16 geschaltet.

Wie bereits weiter oben ausgeführt, ist für die Anwendung der Erfindung die funktionale Aufteilung der erfindungswesentlichen Funktionen auf verschiedene Hardware- und Softwarekomponenten unwesentlich. Auch die Verwendung des Prozessortyps, z.B. Mikroprozessor oder -kontroller sowie die Art der Programmiersprache für ein zu verwendendes Computerprogramm ist unwesentlich.

Die gesamte oder ein großer Teil der Überwachungsvorrichtung können als integrierte Schaltung implementiert sein.

Anstelle bei einem teilnehmerseitigen ISDN NT, der auch als ISDN NTBA (BA = Basisanschluß) mit zwei B- und einem D-Kanal pro Teilnehmer bezeichnet werden kann, ist die Erfindung auch an bei einem Primärmultiplexanschluss, einem sog. PCM 30, anwendbar, an den bis zu 30 Teilnehmer angeschlossen werden können. Der PCM 30 weist dazu teilnehmerseitig eine S₂ₘ-Schnittstelle auf.

Der ISDN NT kann als separates Bauteil ausgeführt sein oder z.B. in die ISDN-Karte eines Computers integriert sein. Die Erfindung ist auch anwendbar bei einem intelligenten ISDN NT zum Anschluß mehrerer Teilnehmer.

Anstelle bei einer Uₖ₀-Schnittstelle (Vollduplex-Betrieb) ist die Erfindung auch anwendbar bei einer Uₚ₀- oder Uₚₙ-Schnittstelle (Halbduplex-Betrieb)

In einer bevorzugten Ausgestaltung der Erfindung ist die Überwachungsvorrichtung auch zum Senden in B-Kanälen geeignet. Dann sind die Dekodierer in vorteilhafter Weise durch Codecs ersetzt, die sowohl dekodieren als auch kodieren können oder es sind zusätzlich separate Kodierer vorgesehen. Des weiteren sind optional geeignete, weitere Bauelemente, wie Echokompensation, Testsignalgenerator, etc. vorhanden. In einer Variante der bevorzugten Ausgestaltung ist der Multiplexer/Demultiplexer 20 ersetzt durch ein ISDN-Telefon oder Teilen davon. Dieses weist die geeigneten Bauelemente sowohl zum Senden als auch zum Empfangen auf. Das ISDN-Telefon ist in vorteilhafter Weise mit einem Computer verbunden. Alternativ können die Umsetzer im ISDN-Telefon integriert sein, das dann zur Überwachungsvorrichtung wird. Umsetzer und benötigte ISDN-Telefon-Funktionalität können auch in einem Computer integriert sein, z.B. mittels einer besonders ausgestalteten Steckkarte, der dann zur Überwachungsvorrichtung wird.

## Patentansprüche

1. Überwachungsvorrichtung (5) für ISDN, beinhaltend:
zwei Ein-/Ausgänge (I/O1, I/O2) zum Verbinden der Überwachungsvorrichtung (5) mit einer externen 2-Draht ISDN- oder DSL-ISDN-Verbindung über U_{K0}- bzw. U-Schnittstellen,
einen ersten, mit dem einen Ein-/Ausgang (I/O1) verbundenen Umsetzer (15) zur Generierung einer ersten internen 4-Draht ISDN-Verbindung,
einen zweiten, mit dem anderen Ein-/Ausgang (I/O2) verbundenen Umsetzer (17) zur Generierung einer zweiten internen 4-Draht ISDN-Verbindung,
einen Multiplexer/Demultiplexer (20) zum Verbinden mit den beiden internen 4-Draht ISDN-Verbindungen und zur Separierung eines D-Kanals,
einen D-Kanal-Protokollanalyzer (21) zur Überwachung des separierten D-Kanals
**dadurch gekennzeichnet, dass** Mittel zur Bereitstellung eines D-Kanals mit verändertem Inhalt im Falle der Detektierung einer vorgegebenen Kennung vorgesehen sind und dass ein beim Teilnehmer vorhandenes Überwachungsgerät (10) mit dieser Kennung angesprochen wird.

2. Überwachungsvorrichtung (5) gemäß Patentanspruch 1, **dadurch gekennzeichnet, dass** die Kennung ein im D-Kanal übertragenes Passwort oder eine im D-Kanal übertragene vorgegebene Rufnummer eines bestimmten, rufenden Teilnehmers (6) ist.

3. Überwachungsvorrichtung gemäß Patentanspruch 1, **dadurch gekennzeichnet, dass** der D-Kanal-Protokollanalyzer (21) derart ausgestaltet ist, im Falle der Detektierung der vorgegebenen Kennung die im separierten D-Kanal enthaltene Gerätetyp-Nummer durch eine vorgegebene Gerätetyp-Nummer zu ersetzen.

4. Überwachungsvorrichtung gemäß Patentanspruch 1, **dadurch gekennzeichnet, dass** der D-Kanal-Protokollanalyzer (21) derart ausgestaltet ist, im Falle der Detektierung der vorgegebenen Kennung die Kommunikation zu einem angerufenen und zu überwachenden Teilnehmer auf eine Layer 1 und Layer 2 Kommunikation zu beschränken und eine Layer 3 Kommunikation zu unterbinden.

5. Überwachungsvorrichtung gemäß Patentanspruch 1, **dadurch gekennzeichnet, dass** der D-Kanal-Protokollanolyzer (21) derart ausgestaltet ist, im Falle der Detektierung der vorgegebenen Kennung den Inhalt des D-Kanals nur dann zu verändern und zum zu überwachenden Teilnehmer weiterzuleiten, wenn beide für den überwachenden Teilnehmer zur Verfügung stehenden B-Kanäle nicht belegt sind.

6. Überwachungsvorrichtung gemäß Patentanspruch 1, **dadurch gekennzeichnet, dass** vier Dekodierer (22, 23, 24, 25) oder Filter vorgesehen sind, um in B-Kanälen übertragene Nutzinformationen zu überwachen.

7. Verfahren zum Überwachen eines ISDN-Teilnehmers, bei dem ein bestimmter, rufender Teilnehmer (6) eine Verbindung zu einer zwischen Vermittlungsstelle (1) und zu überwachendem Teilnehmer geschaltete Überwachungsvorrichtung (5) aufbaut, die Überwachungsvorrichtung (5) durch Überwachen des D-Kanals den rufenden Teilnehmer (6) aufgrund einer vorgegebenen Kennung detektiert, **dadurch gekennzeichnet dass** die Überwachungseinrichtung zur Vermittlungsstelle (1) eine Rückmeldung betreffend einer erfolgreichen Verbindungsaufnahme zum zu überwachenden Teilnehmer überträgt und über den D-Kanal zum überwachenden Teilnehmer veränderte Signalisierungsinformationen zwecks Aufbau einer Verbindung zu einem beim zu überwachenden Teilnehmer angeordneten Überwachungsgerät (10) überträgt.

8. Überwachungsvorrichtung (5) für ISDN noch Anspruch 1
**dadurch gekennzeichnet, dass** Mittel zur Bereitstellung von Signalisierungsinformationen zum Aufbau einer Verbindung zu einem zu überwachenden Teilnehmer im separierten D-Kanal vorhanden sind.

9. Überwachungsvorrichtung (5) gemäß Patentanspruch 8, **dadurch gekennzeichnet, dass** auf jeder der beiden internen 4-Draht ISDN-Verbindungen auf einem ersten der 4 Drähte Toktsignole bereitgestellt werden, auf einem zweiten Rahmensignale, auf einem dritten Draht Informationssignale der Hinrichtung und auf dem vierten Draht Informationssignale der Rückrichtung, dass der erste Draht der 4-Draht internen ISDN-Verbindung des ersten Umsetzers (15) mit dem ersten Draht der 4-Draht internen ISDN-Verbindung des zweiten Umsetzers (17) und dem Multiplexer/Demultiplexer (20) verbunden ist, dass der zweite Draht der 4-Droht internen ISDN-Verbindung des ersten Umsetzers (15) mit dem zweiten Draht der 4-Draht internen ISDN-Verbindung des zweiten Umsetzers (17) und dem Multiplexer/Demultiplexer (20) verbunden ist, dass der dritte Draht der 4-Droht internen ISDN-Verbindung des ersten Umsetzers (15) mit dem Multiplexer/Demultiplexer (20) verbunden ist, dass der vierte Droht der 4-Draht internen ISDN-Verbindung des ersten Umsetzers (15) mit dem Mulliplexer/Damuhiplexer (20) verbunden ist, dass der dritte Droht der 4-Droht internen ISDN-Verbindung des zweiten Umsetzers (17) mit dem Muttiplexer/Demuttiplexer (20) verbunden ist, und dass der vierte Draht der 4-Draht internen ISDN-Verbindung des zweiten Umsetzers (17) mit dem Multiplexer/Demultiplexer (20) verbunden ist.

10. Überwachungsvorrichtung (5) gemäß Patentanspruch 8, **dadurch gekennzeichnet, dass** zwischen Multiplexer/Demultiplexer (20) und D-Kanal-Protokollanalyzer (21) mindestens eine als S₀-Schnittstelle ausgebildete Schnittstelle vorgesehen ist.

## Revendications

1. Dispositif de surveillance (5) pour le RNIS comprenant :
deux entrées/sorties (I/O1, I/O2) pour relier le dispositif de surveillance (5) avec une liaison RNIS ou DSL RNIS à 2 fils externe par le biais d'interfaces U_{K0} ou U, un premier convertisseur (15) relié à une entrée/sortie (I/O1) et destiné à générer une première liaison RNIS à 4 fils interne, un deuxième convertisseur (17) relié à l'autre entrée/sortie (I/O2) et destiné à générer une deuxième liaison RNIS à 4 fils interne, un multiplexeur/démultiplexeur (20) destiné à être relié avec les deux liaisons RNIS à 4 fils internes et à séparer un canal D, un analyseur de protocole de canal D (21) pour surveiller le canal D séparé, **caractérisé en ce que** sont prévus des moyens pour fournir un canal D dont le contenu a été modifié en cas de détection d'un identifiant prédéfini et qu'un appareil de surveillance (10) présent chez l'abonné est activé avec cet identifiant.

2. Dispositif de surveillance (5) selon la revendication 1, **caractérisé en ce que** l'identifiant est un mot de passe transmis dans le canal D ou un numéro d'appel prédéfini d'un abonné appelant (6) donné transmis dans le canal D.

3. Dispositif de surveillance (5) selon la revendication 1, **caractérisé en ce que** l'analyseur de protocole de canal D (21) est configuré de telle sorte qu'en cas de détection de l'identifiant prédéfini, le numéro de type d'appareil contenu dans le canal D séparé est remplacé par un numéro de type d'appareil prédéfini.

4. Dispositif de surveillance (5) selon la revendication 1, **caractérisé en ce que** l'analyseur de protocole de canal D (21) est configuré de telle sorte qu'en cas de détection de l'identifiant prédéfini, la communication vers un abonné appelé et à surveiller est limitée à une communication de couche 1 et de couche 2 et une communication de couche 3 est interdite.

5. Dispositif de surveillance (5) selon la revendication 1, **caractérisé en ce que** l'analyseur de protocole de canal D (21) est configuré de telle sorte qu'en cas de détection de l'identifiant prédéfini, le contenu du canal D n'est modifié et transféré vers l'abonné à surveiller que lorsque les deux canaux B à la disposition de l'abonné à surveiller ne sont pas occupés.

6. Dispositif de surveillance (5) selon la revendication 1, **caractérisé en ce que** sont prévus quatre décodeurs (22, 23, 24, 25) ou filtres pour surveiller les informations utiles transmises dans les canaux B.

7. Procédé de surveillance d'un abonné RNIS avec lequel un abonné appelant (6) donné établit une liaison avec un dispositif de surveillance (5) connecté entre l'autocommutateur (1) et l'abonné à surveiller, le dispositif de surveillance (5) détecte un identifiant prédéfini en surveillant le canal D de l'abonné appelant (6), **caractérisé en ce que** le dispositif de surveillance transmet à l'autocommutateur (1) une réponse indiquant que l'établissement de la liaison vers l'abonné à surveiller a réussi et transmet sur le canal D vers l'abonné à surveiller des informations de signalisation modifiées en vue de l'établissement d'une liaison vers un appareil de surveillance (10) installé chez l'abonné à surveiller.

8. Dispositif de surveillance (5) pour RNIS selon la revendication 1, **caractérisé en ce qu'**il existe des moyens pour fournir des informations de signalisation destinées à établir une liaison avec un abonné à surveiller dans le canal D séparé.

9. Dispositif de surveillance (5) selon la revendication 8, **caractérisé en ce que** sur chacune des deux liaisons RNIS à 4 fils internes, des signaux d'horloge sont fournis sur un premier des 4 fils, des signaux de trame sur un deuxième, les signaux d'information du sens aller sur un troisième fil et les signaux d'information du sens retour sur le quatrième fil, que le premier fil de la liaison RNIS interne à 4 fils du premier convertisseur (15) est relié avec le premier fil de la liaison RNIS interne à 4 fils du deuxième convertisseur (17) et avec le multiplcxcur/démultiplexeur (20), que le deuxième fil de la liaison RNIS interne à 4 fils du premier convertisseur (15) est relié avec le deuxième fil de la liaison RNIS interne à 4 fils du deuxième convertisseur (17) et avec le multiplexeur/démultiplexeur (20), que le troisième fil de la liaison RNIS interne à 4 fils du premier convertisseur (15) est relié avec le mliltiplexeur/démultiplexcur (20), que le quatrième fil de la liaison RNIS interne à 4 fils du premier convertisseur (15) est relié avec le multiplexeur/démultiplexeur (20), que le troisième fil de la liaison RNIS interne à 4 fils du deuxième convertisseur (17) est relié avec le multiplexeur/démultiplexeur (20) et que le quatrième fil de la liaison RNIS interne à 4 fils du deuxième convertisseur (17) est relié avec le multiplexeur/démultiplexeur (20).

10. Dispositif de surveillance (5) selon la revendication 8, **caractérisé en ce qu'**au moins une interface réalisée sous la forme d'une interface S₀ est prévue ente le multiplexeur/démultiplexeur (20) et l'analyseur de protocole de canal D (21).

## Claims

1. Surveillance device (5) for ISDN, containing:
two inputs/outputs (I/O1, 1/O2) for connecting the surveillance device (5) to an external 2-wire ISDN or DSL/ISDN connection over U_{K0} or U interfaces,
a first converter (15) connected to the one input/output (I/O1) for generating a first internal 4-wire ISDN connection,
a second converter (17) connected to the other input/output (I/O2) for generating a second internal 4-wire ISDN connection,
a multiplexer/demultiplexer (20) for connecting to the two internal 4-wire ISDN connections and for separation of a D channel,
a D channel protocol analyzer (21) for monitoring the separated D channel,
**characterized in that** means are provided for supplying a D channel with changed content in the event of detection of a predefined identification, and that a surveillance unit (10) which is present at the subscriber is addressed with this identification.

2. Surveillance device (5) according to Claim 1, **characterized in that** the identification is a password transmitted in the D channel or a predefined call number of a particular calling subscriber.(6), transmitted in the D channel.

3. Surveillance device according to Claim 1, **characterized in that** the D channel protocol analyzer (21) is developed such that in the event of detection of the predefined identification it replaces the device type number contained in the separated D channel with a predefined device type number.

4. Surveillance device according to Claim 1, **characterized in that** the D channel protocol analyzer (21) is developed such that in the event of detection of the predefined identification it restricts communication to a subscriber who is called and is to be monitored, to a layer 1 and layer 2 communication, and suppresses a layer 3 communication.

5. Surveillance device according to Claim 1, **characterized in that** the D channel protocol analyzer (21) is developed such that in the event of detection of the predefined identification it only changes the contents of the D channel and forwards them to the subscriber to be monitored, if both B channels available for the monitoring subscriber are not busy.

6. Surveillance device according to Claim 1, **characterized in that** four decoders (22, 23, 24, 25) or filters are provided, in order to monitor user information transmitted in B channels.

7. Method for monitoring an ISDN subscriber, in which a particular calling subscriber (6) sets up a connection to a surveillance device (5) connected between a switching centre (1) and a subscriber to be monitored, the surveillance device (5) by monitoring the D channel detects the calling subscriber (6) based on a predefined identification, **characterized in that** the surveillance device transmits to the switching centre (1) a return message about a successful building up of a connection to the subscriber to be monitored, and transmits changed signalling information over the D channel to the monitoring subscriber, with the purpose of setting up a connection to a surveillance unit (10) arranged at the subscriber to be monitored.

8. Surveillance device (5) for ISDN according to Claim 1 **characterized in that** means for supplying signalling information for setting up a connection to a subscriber to be monitored are present in the separated D channel.

9. Surveillance device (5) according to Claim 8, **characterized in that** on each of the two internal 4-wire ISDN connections clock signals are provided on a first of the 4 wires, frame signals on a second, on a third wire information signals of the go direction, and on the fourth wire information signals of the return direction, that the first wire of the 4-wire internal ISDN connection of the first converter (15) is connected to the first wire of the 4-wire internal ISDN connection of the second converter (17) and to the multiplexer/demultiplexer (20), that the second wire of the 4-wire internal ISDN connection of the first converter (15) is connected to the second wire of the 4-wire internal ISDN connection of the second converter (17) and to the multiplexer/ demultiplexer (20), that the third wire of the 4-wire internal ISDN connection of the first converter (15) is connected to the multiplexer/demultiplexer (20), that the fourth wire of the 4-wire internal ISDN connection of the first converter (15) is connected to the multiplexer/demultiplexer (20), that the third wire of the 4-wire internal ISDN connection of the second converter (17) is connected to the multiplexer/demultiplexer (20), and that the fourth wire of the 4-wire internal ISDN connection of the second converter (17) is connected to the multiplexer/demultiplexer (20).

10. Surveillance device (5) according to Claim 8, **characterized in that** between the multiplexer/demultiplexer (20) and the D channel protocol analyzer (21) at least one interface developed as an So interface is provided.
